# EUROPEAN PATENT APPLICATION

(11) **EP 1 693 580 A1**
(43) Date of publication of application: **23.08.2006**
(21) Application number: 03780725.2
(22) Date of filing: 11.12.2003
(51) Int. Cl.: F16C 19/18, F16C 33/78, F16C 33/66, F16C 33/32, F16C 33/58, F16H 57/02

(54) **BEARING DEVICE FOR SUPPORTING PINION SHAFT AND PINION SHAFT SUPPORTING DEVICE**

(71) Applicant: JTEKT Corporation, Osaka-shi Osaka 542-8502 (JP)
(72) Inventor: KAWAMURA, Motoshi, c/o JTEKT Corporation, Osaka-shi, Osaka 542-8502 (JP); IWAWAKI, Takeshi, c/o JTEKT Corporation, Osaka-shi, Osaka 542-8502 (JP); YOKOTA, Kunihiko, c/o JTEKT Corporation, Osaka-shi, Osaka 542-8502 (JP)
(74) Representative: TER MEER - STEINMEISTER & PARTNER GbR
(86) International application number: PCT/JP2003/015853
(87) International publication number: WO 2005/057029

(57) **Abstract**

A double row angular contact ball bearing with vertex of contact angles outside of bearing 6 is employed for supporting a pinion shaft 5, and an internal space of the bearing 6 is also sealed with seals 20 and 30 equipped at both ends thereof in a shaft direction, so that grease is filled in this sealed bearing internal space. In this case, oil being used for a target apparatus for use of the pinion shaft 5 is not introduced inside the bearing 6, so that problems which have been generated in a conventional example where said oil has been introduced inside the bearing 6 can be cleared up.

## Description

### 1. Field of the invention

The present invention relates to a bearing apparatus for supporting a pinion shaft and a pinion shaft support apparatus.

### 2. Description of the prior art

As a bearing apparatus for supporting a pinion shaft for rotatably supporting the pinion shaft incorporated in a transfer, a differential, or the like mounted on a vehicle, a bearing apparatus using two single row tapered roller bearings (refer to Japanese Patent Application Laid-Open No. 10-220468) and a bearing apparatus in which a single row tapered roller bearing and a single row angular contact ball bearing are integrated (refer to Japanese Patent Application Laid-Open No. 53-74653) are conventionally employed.

For both of the bearing apparatuses for supporting the pinion shaft as described above, a pinion gear side thereof is in an opened state without being provided with a seal, and lubrication is performed using oil accommodated inside the transfer or the differential.

In the transfer or the differential described above, torque reduction for the pinion shaft has been required in recent years.

However, in both of the bearing apparatuses for supporting the pinion shaft described above, since the tapered roller bearing is employed, there exists a limitation in torque reduction.

In addition to that, in the case of the bearing apparatus for supporting the pinion shaft being used for the transfer, since a central shaft line of the pinion shaft is arranged upper than a central position of a transfer case, it may be pointed out that the oil in the case does not easily reach the inside of the bearing apparatus for supporting the pinion shaft. For that reason, a shape of the transfer case must be devised so that the oil may be efficiently introduced into the inside of the bearing, thereby forcing enlargement of the case.

On the other hand, in the case of the bearing apparatus for supporting the pinion shaft being used for the differential, since a central shaft line of the pinion shaft is arranged lower than a central position of the transfer case, the oil is introduced excessively, so that there is pointed out disadvantages in achieving torque reduction such that stirring resistance of the oil is increased and foreign substances in the oil are bit between a tapered roller and a raceway surface.

### Summary of the Invention

A bearing apparatus for supporting a pinion shaft of the present invention is a bearing apparatus for supporting a shank portion of a pinion shaft having a pinion gear at one end, and is a double row angular contact ball bearing with vertex of contact angles outside of bearing, wherein grease is filled in a bearing internal space sealed with seals equipped at both ends in a shaft direction.

In this case, rolling resistance of the double row angular contact ball bearing with vertex of contact angles outside of bearing is smaller compared with that of a tapered roller bearing, thereby giving the advantage of reducing torque. Moreover, the double row angular contact ball bearing with vertex of contact angles outside of bearing is configured so as to be sealed with the seals to be lubricated by the grease, so that oil in a target apparatus for use of the pinion shaft is not introduced inside the bearing, thereby enabling to clear up the problems relevant to the oil which have been pointed out in the conventional example.

Incidentally, the double row angular contact ball bearing with vertex of contact angles outside of bearing described above may comprise a single outer ring having double raceway surfaces in a shaft direction and also having counter bores at both ends thereof in the shaft direction, a first inner ring having a single raceway surface pairing with one raceway surface of this outer ring and also having a counter bore at an inner edge in the shaft direction, a second inner ring having a singe raceway surface pairing with the other raceway surface of said outer ring and also having a counter bore at an inner edge in the shaft direction, and a plurality of balls interposed between said double raceway surfaces of said outer ring and each of said raceway surfaces of said two inner rings.

A contact angle of said ball may be set to be preferably not less than 30 degrees and not more than 45 degrees. Preferably, a radius of curvature of each raceway surface of said outer ring may be set to be not less than 51.0% and not more than 52% of the ball diameter, and a radius of curvature of the raceway surface of each of said inner ring may also be set to be not less than 50.2% and not more than 51.2% of the ball diameter, respectively. When the contact angle of the double row angular contact ball bearing with vertex of contact angles outside of bearing, and the radius of curvature of the raceway surface are specified so as to be different from those of a typical standard item like this, load carrying capacity and durability can be improved.

An outer peripheral portion of said each seal is preferably fixed to the two counter bores of said outer ring, and may be configured so as to comprise a lip portion at an inner periphery having a shape for contacting to each shoulder portion of said two inner rings, and being able to be opened towards the outside of the bearing. In this case, the seal is a particularly superior type for preventing foreign substances from entering the inside from the outside of the bearing, thereby giving the advantage of stabilizing a behavior of the grease filled inside the bearing.

Preferably, the lip portion of the seal arranged at a pinion gear side is compulsorily pressed to the shoulder portion of said inner ring by means of a spring ring.

An air flow portion for communicating the inside with the outside of said bearing is preferably formed in the seal arranged on a counter-pinion gear side. In this case, an internal pressure thereof is lowered rather than an external pressure as the bearing is cooled to a low temperature state from a high temperature state, so that a pressure differential between the inside and the outside of the bearing may be reduced by an air flow function between the inside and the outside of the bearing by means of the air flow portion formed in the seal on the counter-pinion gear side. Thus, there may be now prevented a generation of a phenomenon where the lip portion of the seal on the counter-pinion gear side is strongly pressed to the shoulder portion of the inner ring (so-called sticking phenomenon).

A pinion shaft support apparatus of the present invention comprises a pinion shaft having a pinion gear at one end and having a screw shaft portion at the other end, a double row angular contact ball bearing with vertex of contact angles outside of bearing attached to an outside of a shank portion of said pinion shaft, a nut which is screwed and fixed onto said screw shaft portion of said pinion shaft and integrates said double row angular contact ball bearing with vertex of contact angles outside of bearing with said pinion shaft, wherein said double row angular contact ball bearing with vertex of contact angles outside of bearing is filled with grease in a bearing internal space sealed with seals equipped at both ends in a shaft direction.

In this case, the double row angular contact ball bearing with vertex of contact angles outside of bearing is equivalent to the bearing apparatus for supporting the pinion shaft mentioned above, thereby making it possible to obtain a function and an effect in a matter similar to the above. Moreover, the pinion shaft and the double row angular contact ball bearing with vertex of contact angles outside of bearing as the bearing apparatus for supporting the pinion shaft are unitized, so that time and effort in incorporating it in a target for use is reduced, thereby making it possible to improve assembly performance.

### BRIEF DESCRIPTION OF THE DRAWINGS

Fig. 1 is a cross-sectional view showing a pinion shaft support apparatus according to one embodiment of the present invention;
Fig. 2 is an enlarged view of an upper half of double row angular contact ball bearing with vertex of contact angles outside of bearing shown in Fig. 1;
Fig. 3 is a perspective view showing a tail end seal in Fig. 1;
Fig. 4 is a perspective view showing an application of the head end seal in Fig. 1; and
Fig. 5 is a perspective view showing an application of the tail end seal in Fig. 1.

### DETAILED DESCRIPTION OF THE PREFERRED EMBODIMENTS

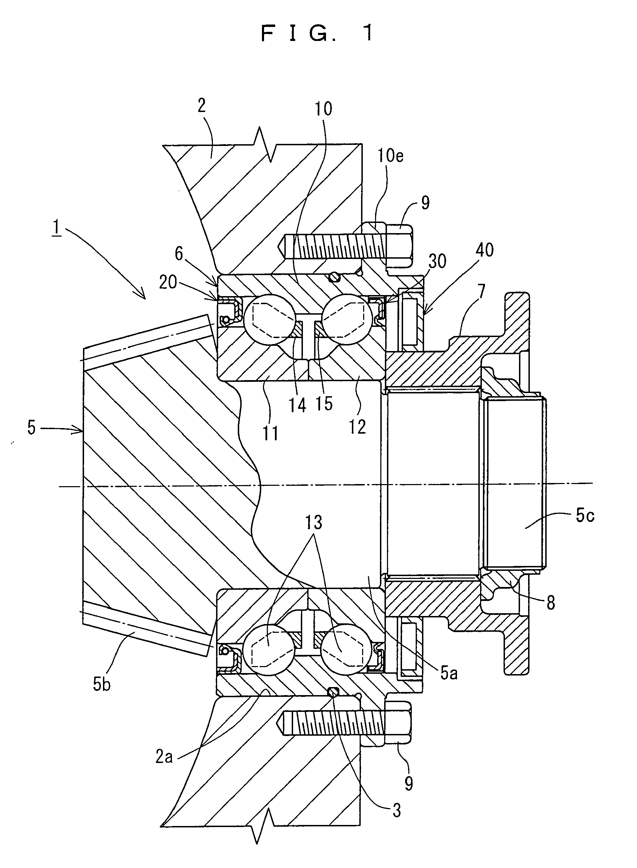

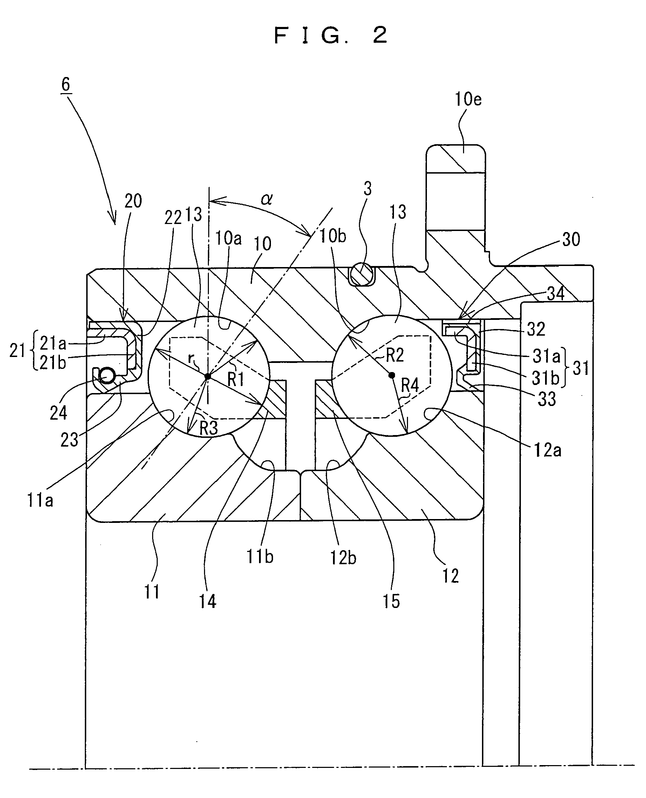

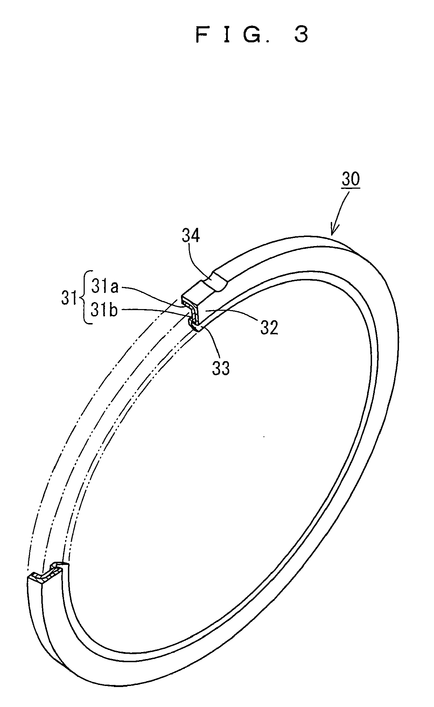

Referring to Fig. 1 through Fig. 3, description will be made of a preferred embodiment of the present invention. A pinion shaft support apparatus 1 illustrated in the drawings is incorporated in a case 2 of a transfer or a differential, and comprises a pinion shaft 5, a double row angular contact ball bearing with vertex of contact angles outside of bearing 6, a coupling sleeve 7, and a nut 8. Incidentally, the double row angular contact ball bearing with vertex of contact angles outside of bearing 6 is equivalent to a bearing apparatus for supporting a pinion shaft.

A pinion gear 5b is formed at one end of a shank portion 5a of the pinion shaft 5 in a shaft direction, and a screw shaft portion 5c is formed at the other end thereof in the shaft direction, respectively. The double row angular contact ball bearing with vertex of contact angles outside of bearing 6 is attached to the outside of the shank portion 5a of this pinion shaft 5, and the coupling sleeve 7 is spline-fitted thereto, and the nut 8 is screwed onto the screw shaft portion 5c of the pinion shaft 5, so that in a state where a preload is applied to the double row angular contact ball bearing with vertex of contact angles outside of bearing 6, the double row angular contact ball bearing with vertex of contact angles outside of bearing 6 is integrated with the pinion shaft 5, and the pinion shaft support apparatus 1 is thus configured.

The coupling sleeve 7 is connected with a propeller shaft (not shown) of a vehicle.

The coupling sleeve 7 is generally called an output flange which produces a turning force of the pinion shaft 5 to said propeller shaft in the case of the transfer, and called a companion flange which supplies the turning force of said propeller shaft into the pinion shaft 5 in the case of the differential.

The pinion shaft support apparatus 1 is rotatably supported at its shank portion 5a of the pinion shaft 5 by a through hole 2a of the case 2 via the double row angular contact ball bearing with vertex of contact angles outside of bearing 6 in a state of arranging the pinion gear 5b inside the case 2, and the double row angular contact ball bearing with vertex of contact angles outside of bearing 6 receives an axial load and a radial road which act on the pinion shaft 5.

Description will be made of the double row angular contact ball bearing with vertex of contact angles outside of bearing 6 in detail.

The double row angular contact ball bearing with vertex of contact angles outside of bearing 6 comprises a single outer ring 10, two inner rings 11 and 12, a plurality of balls 13, and two cage rings 14 and 15.

The outer ring 10 has double raceway surfaces 10a and 10b in the shaft direction, and also has counter bores 10c and 10d on both ends thereof in the shaft direction and is further comprised of a flange 10e radially extending outwardly at an outer diameter portion. This outer ring 10 is fitted into the through hole 2a of the case 2, and its flange 10e is fixed to the case 2 with a bolt 9. An O ring 3 is interposed in a fitting surface between the outer ring 10 and the through hole 2a of the case 2.

A first inner ring 11 has a single raceway surface 11a pairing with one raceway surface 10a of the outer ring 10, and also has a counter bore 11b at an inner edge in the shaft direction. A second inner ring 12 has a single raceway surface 12a pairing with the other raceway surface 10b of the outer ring 10, and also has a counter bore 12b at an inner edge in the shaft direction. These two inner rings 11 and 12 are attached to the outside of the shank portion 5a of the pinion shaft 5.

The balls 13 are interposed between the double row raceway surfaces 10a and 10b of the outer ring 10, and each of the raceway surfaces 11a and 12a of the two inner rings 11 and 12. The cage rings 14 and 15 are called a crown type, and circumferentially arrange at approximately equal intervals each of said plurality of balls 13 which are arranged in double rows.

The double row angular contact ball bearing with vertex of contact angles outside of bearing 6 is designed so as to be different from a typical standard item in view of an operating condition in the transfer or the differential. Hereafter, description will be made of it in detail.

Now, in the case of the double row angular contact ball bearing with vertex of contact angles outside of bearing of the typical standard item, a nominal angle of contact α of the ball 13 is set to be not less than 20 degrees and not more than 25 degrees.

Radiuses of curvature R1 and R2 of each of the raceway surfaces 10a and 10b of the outer ring 10 is set to be not less than 52.5% and not more than 53% of a diameter r of the ball 13.

Radiuses of curvature R3 and R4 of the raceway surfaces 11a and 12a of each of the inner rings 11 and 12 are set to be not less than 51.5% and not more than 52.5% of the diameter r of the ball 13.

As opposed to this, the nominal angle of contact α of the ball 13 is set to be not less than 30 degrees, and preferably in the range of not less than 35 degrees and not more than 45 degrees in this embodiment. The radiuses of curvature R1 and R2 of each of the raceway surfaces 10a and 10b of the outer ring 10 are set to be not less than 51.0% and not more than 52% of the diameter r of the ball 13, and preferably not less than 51.2% and not more than 51.8% thereof. The radiuses of curvature R3 and R4 of the raceway surfaces 11a and 12a of each of the inner rings 11 and 12 are set to be not less than 50.2% and not more than 51.2% of the diameter r of the ball 13, preferably not less than 50.5% and not more than 51% thereof.

If the nominal angle of contact α is thus set to be larger than a typical value described above, load capacity in an axial direction may be increased. If the radiuses of curvature R1 through R4 are set to be smaller than the typical value described above, indentation by the ball 13 may be made hard to attach to the outer ring 10 or two inner rings 11 and 12. Thereby making it possible to improve load carrying capacity and durability as the double row angular contact ball bearing with vertex of contact angles outside of bearing 6.

Besides making the maximum thickness of the two inner rings 11 and 12 larger than that of the typical standard item, an outer diameter dimension about a bottom and an outer diameter dimension of a shoulder portion of the raceway surfaces 11a and 12a are set to be large as much as possible (those are formed to be relatively thicker than that of the outer ring 10), and outer diameter dimensions of the counter bore 11b and 12b are also set to be small as much as possible. Thus, a pitch circle diameter (PCD) of the ball 13 may be enlarged as much as possible, thereby making it possible to increase the number of balls 13 to be used and improve load carrying capacity. Furthermore, since a step (or the amount of gradation) from the raceway surfaces 11a and 12a to the counter bore 11b and 12b is increased, an opposite annular space between the outer ring 10 and two inner rings 11 and 12 may be enlarged, thereby making it possible to increase an amount of grease to be enclosed.

Furthermore, the double row angular contact ball bearing with vertex of contact angles outside of bearing 6 is configured so as to be lubricated not by the oil accommodated within the case 2 but by the grease, and description will be made of it in the following.

In other words, both ends of the outer ring 10 in the shaft direction are equipped with contacted type seals 20 and 30, so that the opposite annular space between the outer ring 10 and the two inner rings 11 and 12 (bearing internal space) is sealed, and a predetermined amount of grease is then filled in this annular space (not shown).

Moreover, a slinger 40 with U section is arranged at a far outside of the seal 30 on the tail end. The inner peripheral portion of this slinger 40 is fixed to an outer peripheral surface of the coupling sleeve 7 by means of a press fit, and an outer peripheral portion thereof is faced to an inner peripheral surface of a heel of the outer ring 10 via a fine clearance, so that a labyrinth seal (non-contacting seal portion) is formed.

Incidentally, the seal 20 arranged on the head end (pinion gear 5b side) is generally formed by a type called an oil seal, and in addition to that, the seal 30 arranged on the tail end (counter-pinion gear 5b side) is formed by a type called a bearing seal. When describing this in detail, the two seals 20 and 30 described above are configured by means of vulcanization-adhering of elastic bodies 22 and 32, such as rubber, to annular core rings 21 and 31. Said annular core rings 21 and 31 have a shape where annular plate portions 21b and 31b radially extending inwardly are arranged at one end of bodies 21a and 31a in the shaft direction. Moreover, said elastic bodies 22 and 32 comprises a covering skin portion (symbol is not shown) which covers from the periphery of the bodies 21a and 31a of said annular core rings 21 and 31 to one side of the annular plate portions 21b and 31b, and lip portions 23 and 33 which project to an inner periphery of the annular plate portions 21b and 31b. Incidentally, the lip portions 23 and 33 have a shape being able to be opened towards the outside of the bearing so as to mainly prevent foreign substances from entering from the outside of the bearing.

The bodies 21a and 31a of the annular core rings 21 and 31 are fitted to the two counter bores 10c and 10d of the outer ring 10 by a press fit via the covering skin portion of the elastic bodies 22 and 32, respectively, thereby both of the seals 20 and 30 described above are fixed. In a state where the seals 20 and 30 are fixed like this, inner peripheries of the lip portions 23 and 33 are contacted to each shoulder portion of the two inner rings 11 and 12 in a state with a predetermined tightly pressed force.

Moreover, the head end seal 20 described above is configured such that the lip portion 23 is compulsorily pressed to the first inner ring 11 by means of a spring ring 24, so that sealing performance is improved as much as possible, thereby making it possible to strongly prevent the oil in the case 2 from entering the inside of the bearing.

In the meanwhile, the tail end seal 30 described above does not employ a spring ring or the like, and an inner diameter of the lip portion 33 is only set to be smaller than the outer diameter of the shoulder portion of the inner ring 12 by a predetermined amount, thereby the lip portion 33 is contacted to the inner ring 12 by means of utilizing this variation of tolerance in a state where the diameter thereof is resiliently expanded.

Moreover, in the tail end seal 30, there is provided an air flow groove 34 along the shaft direction at one portion of a circumference of the outer diameter portion as an air flow portion for communicating the inside with the outside of the bearing. This air flow groove 34 is arranged in the body 31a of the annular core ring 31, and the covering skin portion of the elastic body 32 which is put on this body 31a is put so as to follow to an outer diameter shape of the body 31a. In this case, when the double row angular contact ball bearing with vertex of contact angles outside of bearing 6 is cooled to a low temperature state from a high temperature state, an internal pressure of the bearing will be lowered rather than an external pressure thereof, but in that case, since a pressure differential between the inside and the outside of the bearing may be reduced by means of an air flow function between the inside and the outside of the bearing caused by the air flow groove 34 formed in the tail end seal 30, there can be prevented a generation of a phenomenon where the lip portion 33 at the tail end seal 30 is strongly pressed to the shoulder portion of the inner ring 12 (so-called sticking phenomenon).

Incidentally, an acrylic rubber, a heat-resistant acrylic rubber, or the like is preferably used as the elastic bodies 22 and 32 of the seals 20 and 30 described above. Said heat-resistant acrylic rubber may be an ethylene acrylic rubber in which an ethylene and an acrylic ester are combined as base of a copolymer composition.

Moreover, as for the grease filled inside the double row angular contact ball bearing with vertex of contact angles outside of bearing 6, a diurea type grease or an ester type grease having a desirable affinity with gear oil is preferably employed taking into consideration heat resistance. Specifically, a grease called, for example a tradename KNG170 made by Japan Grease Co. Ltd., or a tradename MULTEMP SRL made by Kyoudou Yusi Co. Ltd. , is suitably used as this grease. The above KNG170 is provided by employing a poly α olefin mineral oil as base oil, and a diurea as thickening agent, and an operating temperature limit thereof is -30 degree C through 150 degree C. The above MULTEMP SRL is provided by employing an ester as base oil, and a lithium soap as thickening agent, and an operating temperature limit thereof is -40 degree C through 130 degree C.

As described above, the double row angular contact ball bearing with vertex of contact angles outside of bearing 6 is used for supporting the pinion shaft 5, so that rolling resistance thereof is reduced compared with that in the case of using a tapered roller bearing, thereby obtaining the advantage for achieving torque reduction. Moreover, as for the double row angular contact ball bearing with vertex of contact angles outside of bearing 6, the nominal angle of contact α, and the radiuses of curvature R1 and R2 of the raceway surfaces 10a and 10b of the outer ring 10 and the radiuses of curvature R3 and R4 of the raceway surfaces 11a and 12a of each of the inner rings 11 and 12 are made different from those of the typical standard item, so that it is specified so as to clear up an operating condition in the transfer or the differential, thereby ensuring sufficient load carrying capacity and durability. Moreover, the double row angular contact ball bearing with vertex of contact angles outside of bearing 6 is configured so as to be sealed with the seals 20 and 30 to be lubricated with the grease, so that the oil in the case 2 which is a target for use of the pinion shaft 5 may not be introduced therein, thereby clearing up the problems relevant to the oil that have been pointed out in the conventional example. In other words, grease lubrication is employed instead of oil lubrication, so that an increase in torque by oil stirring resistance can be suppressed, and since it is necessary to form neither an oil introduction path nor an oil return path in the case 2, or the like, reduction in size and weight of the transfer or the differential may be achieved, and in addition to that, since it is not influenced by foreign substances in the oil like a case of the oil lubrication, it may contribute to a life improvement of the double row angular contact ball bearing with vertex of contact angles outside of bearing 6, and a maintenance-free improvement thereof.

Therefore, in the pinion shaft support apparatus 1 of this embodiment, torque of the pinion shaft 5 may be reduced compared with that of the conventional example, thereby making it possible to contribute to an improving in efficiency of the transfer and the differential.

In addition to this, the pinion shaft 5 and the double row angular contact ball bearing with vertex of contact angles outside of bearing 6 are unitized to configure the pinion shaft support apparatus 1 as above embodiment, so that time and effort in incorporating it in the case 2 of the transfer or the differential that is a target for use is reduced, thereby making it possible to improve assembly performance.

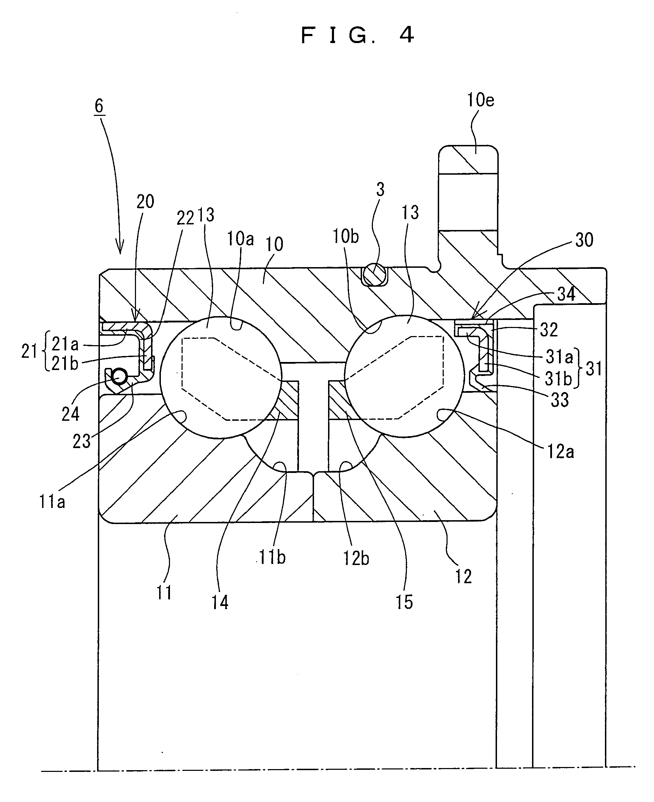

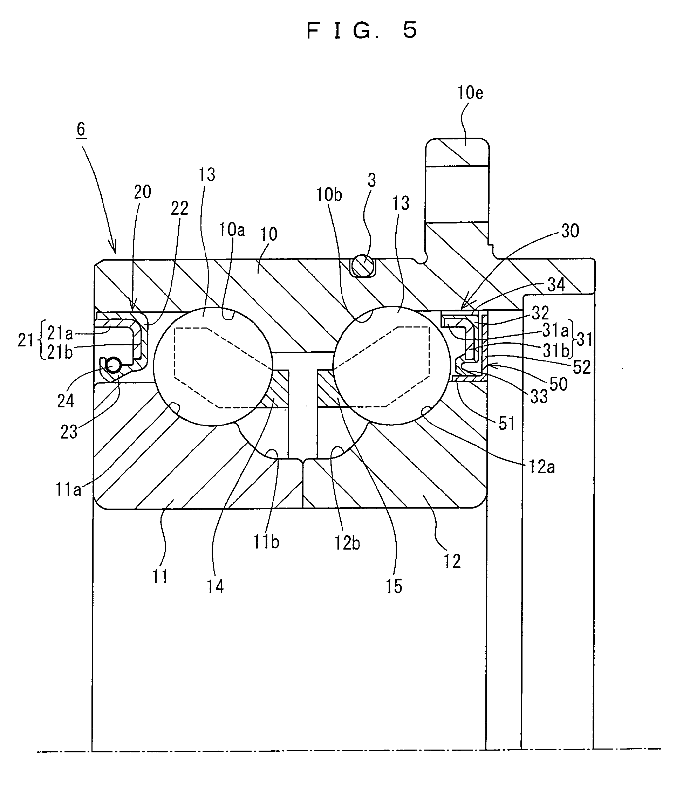

Another embodiment of the present invention will be described in the following.
(1) As for the seal 20 on the head end described above, the covering skin portion of the elastic body 22 is formed on the inner peripheral surface of the body 21a of the annular core ring 21, and the body 21a of the annular core ring 21 is fitted into the counter bore 10c of the outer ring 10 by means of a direct press fit as shown in Fig. 4. Incidentally, a surface of the counter bore 10c of the outer ring 10 is finished in smoothness by means of polishing, thereby improving sealing performance of a fitting surface with the annular core ring 21. In this case, accuracy of position for fitting the seal 20 on head end may be improved, and interference with the ball 13 can be certainly avoided.
(2) As for the seal 30 on the tail end described above, it may be made as a configuration called the so-called pack seal combining with a slinger 50 as shown in Fig. 5. The lip portion 33 of the seal 30 is contacted with the outer peripheral surface of the body 51 of the slinger 50 with a predetermined tightly pressed force, and in addition to that, the covering skin portion which covers the annular plate portion 31b of the seal 30 is faced to an annular plate portion 52 of the slinger 50 via a fine clearance. In this case, an effect of preventing water from entering the inside of the bearing is improved even when the water is poured from the outside, and in addition to that, protection of the seal 30 can be achieved, such as being able to prevent water from directly touching to the seal 30 by means of the existence of the slinger 50.
(3) In the embodiment described above, in order to integrate the pinion shaft 5 with the double row angular contact ball bearing with vertex of contact angles outside of bearing 6, it is configured so that the nut 8 may be screwed and fastened onto the screw shaft portion 5c of the pinion shaft 5, but following configuration may be employed. In other words, without providing the screw shaft portion 5c to the pinion shaft 5, the counter-pinion gear 5b side of this pinion shaft 5 is made into a tubular type shape, and this tubular type shape portion is roll-caulked in a form of outwardly extending in the radial direction, thereby making it possible to achieve a structure for integrating the pinion shaft 5 with the double row angular contact ball bearing with vertex of contact angles outside of bearing 6 by means of this caulking portion.

In the above bearing apparatus for supporting the pinion shaft, besides making it smaller in size and light in weight, it is possible to reduce torque of the pinion shaft compared with that of the conventional example.

In the pinion shaft support apparatus of the present invention, besides making it smaller in size and light in weight, it is possible to make torque of the pinion shaft smaller compared with that of the conventional example and also achieve an assembly simplification to a target for use

### Industrial Availability

It can be used for a bearing apparatus for supporting a pinion shaft for rotatably supporting a pinion shaft incorporated in a transfer, a differential, or the like mounted on a vehicle.

## Claims

1. In a bearing apparatus for supporting a shank portion of a pinion shaft having a pinion gear at one end, the bearing apparatus for supporting the pinion shaft, comprising:
a double row angular contact ball bearing with vertex of contact angles outside of bearing,
wherein grease is filled in a bearing internal space sealed with seals equipped at both ends in a shaft direction.

2. The bearing apparatus for supporting the pinion shaft according to claim 1, wherein said double row angular contact ball bearing with vertex of contact angles outside of bearing comprises
a single outer ring having double raceway surfaces in a shaft direction and also having counter bores at both ends thereof in the shaft direction,
a first inner ring having a single raceway surface pairing with one raceway surface of this outer ring and also having a counter bore at an inner edge in the shaft direction,
a second inner ring having a singe raceway surface pairing with the other raceway surface of said outer ring and also having a counter bore at an inner edge in the shaft direction, and
a plurality of balls interposed between said double raceway surfaces of said outer ring and each of said raceway surfaces of said two inner rings.

3. The bearing apparatus for supporting the pinion shaft according to claim 2, wherein a contact angle of said ball is set to be not less than 30 degrees and not more than 45 degrees.

4. The bearing apparatus for supporting the pinion shaft according to claim 2, wherein a radius of curvature of each raceway surface of said outer ring is set to be not less than 51.0% and not more than 52% of a ball diameter, and a radius of curvature of the raceway surface of each of said inner ring is set to be not less than 50.2% and not more than 51.2% of the ball diameter, respectively.

5. The bearing apparatus for supporting the pinion shaft according to claim 2, wherein an outer peripheral portion of said each seal is fixed to the two counter bores of said outer ring, and
comprises a lip portion at an inner periphery having a shape for contacting to each shoulder portion of said two inner rings, and being able to be opened towards the outside of the bearing.

6. The bearing apparatus for supporting the pinion shaft according to claim 5, wherein the lip portion of the seal arranged on a pinion gear side is compulsorily pressed to the shoulder portion of said inner ring by means of a spring ring.

7. The bearing apparatus for supporting the pinion shaft according to claim 1, wherein an air flow portion for communicating an inside with an outside of said bearing is formed in said seal arranged on a counter-pinion gear side.

8. A pinion shaft support apparatus, comprising:
a pinion shaft having a pinion gear at one end and having a screw shaft portion at the other end;
a double row angular contact ball bearing with vertex of contact angles outside of bearing attached to an outside of a shank portion of said pinion shaft; and
a nut which is screwed and fixed onto said screw shaft portion of said pinion shaft and integrates said double row angular contact ball bearing with vertex of contact angles outside of bearing with said pinion shaft,
wherein said double row angular contact ball bearing with vertex of contact angles outside of bearing is filled with grease in a bearing internal space sealed with seals equipped at both ends in a shaft direction.
